# EUROPEAN PATENT APPLICATION

(11) **EP 3 675 486 A1**
(43) Date of publication of application: **01.07.2020**
(21) Application number: 19215778.2
(22) Date of filing: 12.12.2019
(51) Int. Cl.: H04N 7/18

(54) **CONTROL DEVICE, INDUSTRIAL AUTOMATION SYSTEM, METHOD OF CONTROLLING CONTROL DEVICE, PROGRAM, AND NON-TRANSITORY COMPUTER-READABLE STORAGE MEDIUM**

(30) Priority: 27.12.2018 JP 2018246040
(71) Applicant: CANON KABUSHIKI KAISHA, Ohta-ku Tokyo 146-8501 (JP)
(72) Inventor: OKA, Hiroto, Ohta-ku, Tokyo 146-8501 (JP); UDONO, Kazuki, Ohta-ku, Tokyo 146-8501 (JP); HARAGUCHI, Tomohiko, Ohta-ku, Tokyo 146-8501 (JP); CHO, Genki, Ohta-ku, Tokyo 146-8501 (JP); OMORI, Shinya, Ohta-ku, Tokyo 146-8501 (JP)
(74) Representative: Houle, Timothy James

(57) **Abstract**

A control device (102) is connected to cameras (101) each of which performs an event detecting process on an obtained image. The control device (102) includes a CPU (302) that obtains information about an event detection result from each of the cameras (101) and that performs an error determining process of determining whether an image that is obtained from each of the cameras (101) satisfies an error determination condition in a case that the event detection result satisfies a trigger condition.

## Description

### BACKGROUND OF THE INVENTION

### Field of the Invention

The present invention relates to a control device that processes an image that is imaged by an imaging apparatus, a control method, an industrial automation system, a program, and a storage medium.

### Description of the Related Art

There is a control device that obtains an image of a region that may contain an object (workpiece) from an imaging apparatus such as a camera and that controls the operation of a device such as a robot arm by using information about the position of the workpiece that is obtained on the basis of the image, and an industrial automation system that includes the control device. The control device performs an analyzing process on the image that is obtained from the camera to determine whether an error occurs in a region of the object to be imaged and performs, for example, a process of recording the image on the basis of a determination result.

In some cases, such a control device is connected to imaging apparatuses to obtain images at a number of points of view.

Japanese Patent Laid-Open No. 2007-19697 discloses an image-analyzing system that includes cameras, a pre-analysis device that analyzes images that are captured by the cameras, and a server (post-analysis device) that analyzes the images on the basis of a result of the analysis by the pre-analysis device.

### SUMMARY OF THE INVENTION

The present invention in its first aspect provides a control device as specified in claims 1 to 12.

The present invention in its second aspect provides an industrial automation system as specified in claim 13.

The present invention in its third aspect provides a method of controlling a control device as specified in claims 14 to 18.

The present invention in its fourth aspect provides a program as specified in Claim 19.

The present invention in its fifth aspect provides a processor-readable storage medium as specified in Claim 20.

Further features of the present invention will become apparent from the following description of exemplary embodiments with reference to the attached drawings.

### BRIEF DESCRIPTION OF THE DRAWINGS

Fig. 1 is a first configuration diagram of an industrial automation system that includes a control device.
Fig. 2 is a block diagram illustrating a functional block of each of cameras.
Fig. 3 is a block diagram illustrating a functional block of the control device.
Fig. 4A and Fig. 4B illustrate flowcharts of the operation of each of the cameras.
Fig. 5A to Fig. 5F illustrate first schematic diagrams of images that are obtained by the cameras.
Fig. 6 is a schematic diagram illustrating a GUI for setting the operation of the control device.
Fig. 7 is a first flowchart of the whole operation of the control device.
Fig. 8A and Fig. 8B illustrate flowcharts of processes of the control device.
Fig. 9 is a schematic diagram illustrating an image that is displayed on a display device in a case that the result of determination is an error state.
Fig. 10A and Fig. 10B illustrate schematic diagrams of GUIs for setting a determination process and the basic operation of the control device. Each of the embodiments of the present invention described below can be implemented solely or as a combination of a plurality of the embodiments. Also, features from different embodiments can be combined where necessary or where the combination of elements or features from individual embodiments in a single embodiment is beneficial.
Fig. 11 is a schematic diagram illustrating a table in which an event detection result and the degree of priority of reaction are associated with each other.
Fig. 12 is a first schematic diagram illustrating a log of the event detection result that is obtained by one of the cameras.
Fig. 13 is a second schematic diagram illustrating a log of the event detection result that is obtained by one of the cameras.
Fig. 14 is a second configuration diagram illustrating the structure of an industrial automation system.
Fig. 15A and Fig. 15B illustrate second flowcharts of the whole operation of the control device.
Fig. 16A and Fig. 16B illustrate second schematic diagrams of images that are obtained by cameras.

### DESCRIPTION OF THE EMBODIMENTS

Embodiments of the present invention will hereinafter be described with reference to the drawings. The technical scope of the present invention is determined by the scope of Claims and is not restricted by the embodiments described below by way of example. All of combinations of features that will be described according to the embodiments are not necessarily essential for the present invention. Contents in the specification and the drawings are examples and do not restrict the present invention.

### First Embodiment

An industrial automation system according to a first embodiment includes imaging apparatuses and a control device. Each imaging apparatus performs a detecting process in which a region that is set is imaged to obtain an image, and whether a predetermined event occurs is determined on the basis of the image to detect the event. The control device obtains the image from the imaging apparatus that detects the predetermined event and performs a process of analyzing the obtained image to perform a determination process of determining whether an error state has been created. The control device performs predetermined error handling (an exception handling process) if the result of determination is the error state. Examples of the error state include a state in which a workpiece that is stacked on a workbench collapses and a state in which a third person enters the vicinity of the workspace of a robot arm.

Consequently, it is not necessary for the control device to always perform an image analyzing process for determining the error state on the images that are obtained by the imaging apparatuses, and the load of the control device can be reduced.

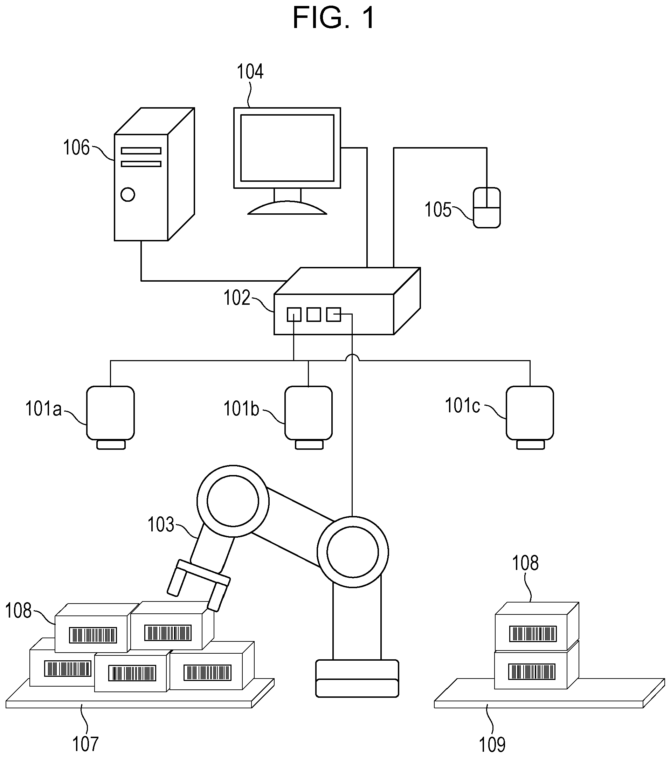

Fig. 1 is a configuration diagram of the industrial automation system that includes a control device 102. The industrial automation system includes cameras 101, the control device 102, a robot arm 103, a display device 104, and a mouse 105.

The industrial automation system also includes an external server 106 that processes information that is outputted from the control device 102. The control device 102 of the industrial automation system controls the operation of the robot arm 103 on the basis of images that are obtained from the cameras 101. The industrial automation system according to the first embodiment controls the robot arm 103 on the basis of the images that are imaged by the cameras 101 to carry out work (basic operation) for stacking, on a workbench 109, workpieces (objects) 108 that are stacked on a workbench 107.

Each of the cameras 101 is an imaging apparatus that images an object to obtain an image (imaged image). According to the present embodiment, the industrial automation system includes cameras 101a, 101b, and 101c. The camera 101a images a region that contains the workbench 107 and the workpieces 108 on the workbench 107 to obtain an image. The camera 101b images a region that contains the robot arm 103 to obtain an image. The camera 101c images a region that contains the workbench 109 and the workpieces 108 on the workbench 109 to obtain an image. In the following description, when the cameras are referred to as the cameras 101a, 101b, and 101c, the cameras that have different imaging regions are distinguished. When the cameras are referred to as the cameras 101, contents common to all of the cameras will be described.

The control device 102 controls devices of the industrial automation system. The control device 102 will be described in detail later.

The robot arm 103 operates in response to an instruction from the control device 102. The robot arm 103 contains a robot control device and receives a control instruction from the outside to control the operation of a shaft or a hand. The operation of the robot arm 103 is controlled in response to, for example, a coordinate position or an operation command that is sent from the control device 102.

The control device 102 may be accommodated in the same housing as a housing in which the robot arm 103 is accommodated. The robot arm 103 may be a conveyance device such as a belt conveyor or a device such as an inspection device provided that the robot arm 103 is a device that operates in response to an instruction of the control device 102. A device that is included in the industrial automation system can include a component other than the above devices. An illumination apparatus that includes a halogen lamp or a light-emitting diode lamp or an external storage device may be included.

The display device 104 is a monitor that is connected to the control device 102 and that displays a graphical user interface (GUI) for setting the operation of the control device 102.

The mouse 105 is an operation input device through which a user instruction is inputted into the control device 102. A user uses the mouse 105 to input operation to the GUI that is displayed on the display device 104. This enables start or termination of the operation of the system to be instructed. The user uses the mouse 105 to operate the GUI that is displayed on the display device 104. This allows the user to set the operation flow of the control device 102. The operation input device is not limited to the mouse 105 but can be a keyboard, a touch device that is provided on the screen of the display device 104 to detect touch operation, or a voice input device.

The server 106 is an information-processing apparatus that processes information that is obtained from the control device 102. The server 106 records a video signal that is inputted from the control device 102 on a recording medium that is contained therein. The server 106 can record the time of occurrence and a log in a case of obtaining, from the control device 102, information representing that an error occurs in the system. The server 106 may issue an alert in a case of obtaining, from the control device 102, the information representing that an error occurs in the system.

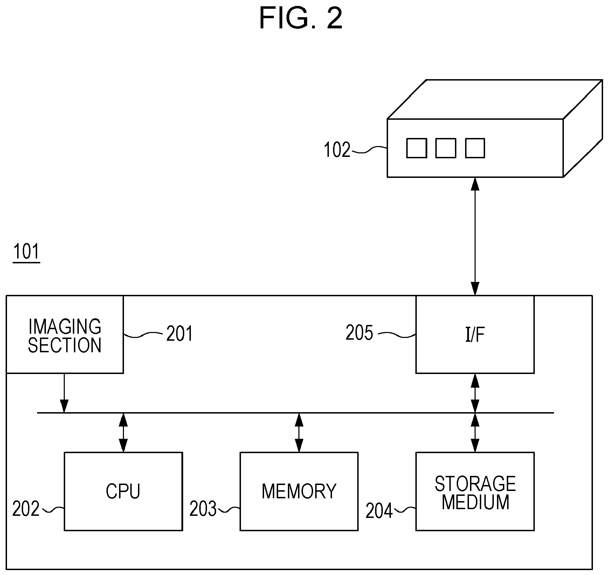

Fig. 2 is a block diagram illustrating the functional block of each of the cameras 101. Each of the cameras 101 includes an imaging section 201, a CPU 202, a memory 203, a storage medium 204, and an I/F section 205.

The imaging section 201 is an imaging unit that includes an imaging lens, a lens-driving system, a sensor, and an image-processing chip.

The CPU 202 is a processor that runs a program that is stored in the memory 203 to cause the corresponding one of the cameras 101 to operate. The CPU 202 may include processors. A part of the function that is performed by the CPU 202 can be performed by one or more electronic circuits.

The CPU 202 sets imaging conditions for the imaging section 201, instructs imaging thereto, and controls the imaging process of the imaging section 201. The CPU 202 causes the memory 203 or the storage medium 204 to store the obtained imaged image. The CPU 202 performs a process (event detecting process) of detecting a predetermined event on the obtained imaged image.

The memory 203 stores the program that is run by the CPU 202. An example of the memory 203 is a ROM. The memory 203 may be another non-volatile memory device such as a RAM, an EPROM, or an EEPROM and may include memories. The storage medium 204 records the imaged image.

The I/F section 205 is an interface that is connected to the control device 102 and that outputs the image and an event detection result to the control device 102. The I/F section 205 receives information about an instruction for imaging and the imaging conditions from the control device 102.

Each of the cameras 101 sends the obtained image to the control device 102 via the I/F section 205. The CPU 202 of each of the cameras 101 performs the event detecting process of detecting an event from the obtained image. The CPU 202 causes the memory 203 to store information about a result that is obtained in the event detecting process.

Each of the cameras 101 has a mechanism of changing the imaging conditions (imaging parameters) such as white balance, an imaging angle (panning/tilting), zoom magnification, focal length, a stop, and a signal amplification factor. Each of the cameras 101 can change the imaging conditions in response to an instruction from the control device 102.

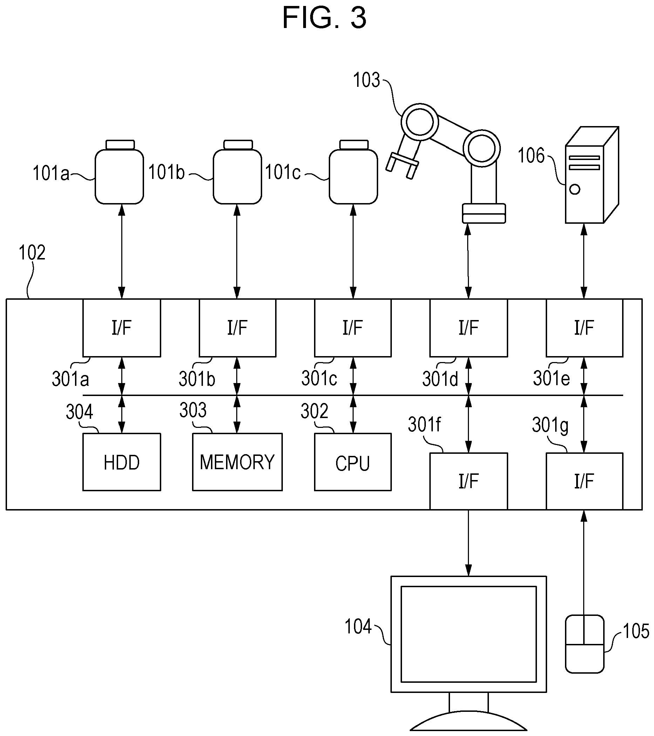

Fig. 3 is a block diagram illustrating the functional block of the control device 102. The control device 102 includes I/F sections 301, a CPU 302, a memory 303, and a HDD 304.

Each I/F section 301 is an interface that is connected to another device included in the system and that sends and receives information in response to an instruction of the CPU 302. The control device 102 includes the I/F sections 301.

I/F sections 301a to 301c are respectively connected to the cameras 101a to 101c and receive, from the cameras 101a to 101c, images and information about results of processes that are performed by the cameras 101a to 101c. The I/F sections 301a to 301c send an instruction for start of imaging, an instruction for termination of imaging, and an instruction for changing the imaging conditions to the cameras 101a to 101c.

An I/F section 301d is connected to the robot arm 103 and sends a control instruction to the robot arm 103. The I/F section 301d receives information about control of the robot arm 103 such as information about completion of the operation of the robot arm 103.

An I/F section 301e is connected to the server 106 and sends an image and an error occurrence signal to the server 106.

An I/F section 301f is connected to the display device 104 and sends a video signal to the display device 104.

An I/F section 301g is connected to the mouse 105 and receives an operation signal.

The I/F sections 301 are based on standards suitable for communication with external devices. For example, a network interface or a serial communication interface is included.

The CPU 302 is a processor that runs a program that is stored in the memory 303 to perform the operation of the control device 102 described later. The CPU 302 may include processors. A part or the whole of the control of the control device 102 described later can be performed by one or more electronic circuits.

The memory 303 is a storage medium that stores parameters and software with which the CPU 302 performs processes for the control device 102. The memory 303 stores one or more pieces of software for providing image processing, an image processing library, image processing settings, and an I/O routine. The CPU 302 uses software for image processing to perform an error determining process described later.

An example of the memory 303 is a ROM. The memory 303 may be another non-volatile memory device such as a RAM, an EPROM, or an EEPROM. The memory 303 may include storage media.

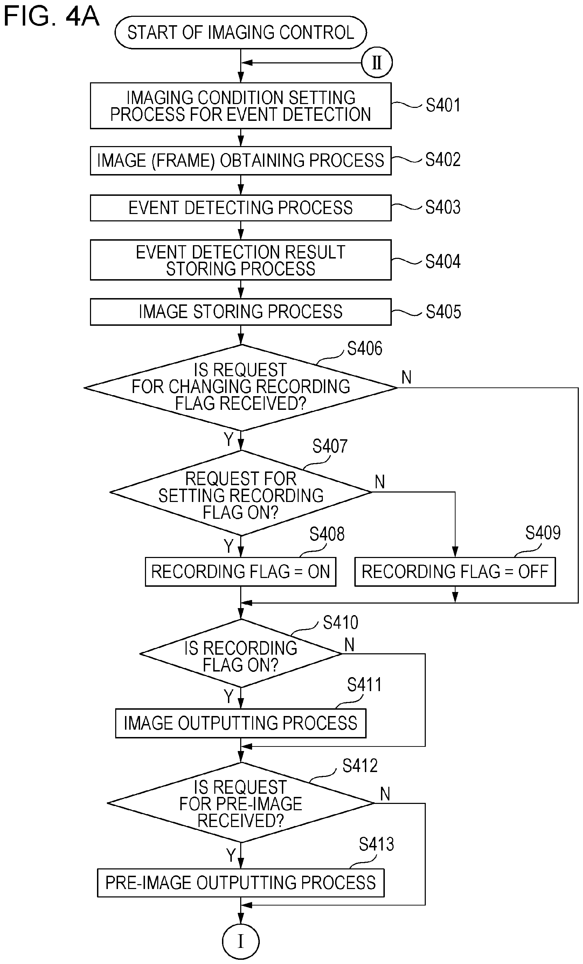

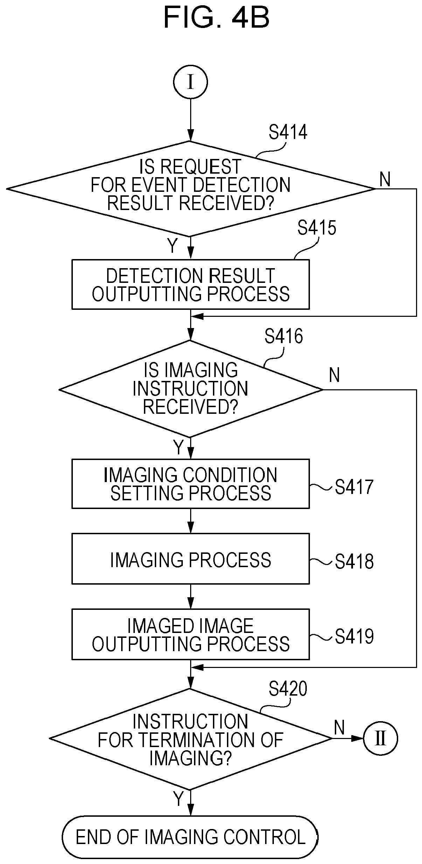

Fig. 4A and Fig. 4B illustrate flowcharts of the operation of each of the cameras 101.

At S401, the CPU 202 sets the imaging conditions in which an image for performing the event detecting process is imaged. The imaging conditions are stored in the memory 203, and the optimum panning, tilting, and zooming for the event detecting process, for example, are set in the imaging conditions in advance. The CPU 202 reads the imaging conditions from the memory 203 to set the imaging conditions in the imaging section 201.

At S402, the CPU 202 outputs the instruction for start of imaging to the imaging section 201 to obtain an image (imaged image). According to the present embodiment, the image that is obtained by each of the cameras 101 is a moving image.

At S403, the CPU 202 performs the event detecting process on the obtained imaged image.

At S404, the CPU 202 causes the storage medium 204 to store the event detection result and time at which the image used in the event detecting process is obtained.

At S405, the CPU 202 causes the storage medium 204 to store the imaged image.

At S406, the CPU 202 determines whether a request for changing a recording flag is received from the control device 102. The request for changing the recording flag is a control signal for start or stop of a post-image recording process, which is one of exception handling processes that are performed by the control device 102 if the control device 102 determines that the result of the error determining process is the error state. The request for changing the recording flag includes a request for setting the record flag ON (ON request) and a request for setting the record flag OFF (OFF request). If any request for changing the recording flag is received, the process proceeds to S407. If not, the process proceeds to S410.

At S407, the CPU 202 determines whether the received request for changing the recording flag is the ON request. If the received request for changing the recording flag is the ON request, the process proceeds to S408. If the received request for changing the recording flag is not the ON request, that is, the OFF request is received, the process proceeds to S409.

At S408, the CPU 202 sets the record flag of the memory 203 to ON. The process proceeds to S410.

At S409, the CPU 202 sets the record flag of the memory 203 to OFF. The process proceeds to S410.

At S410, the CPU 202 determines whether the record flag of the memory 203 is set to ON. If the record flag is set to ON, the process proceeds to S411. If not, the process proceeds to S412.

At S411, the CPU 202 outputs the imaged image that is obtained at S402 to the control device 102.

At S412, the CPU 202 determines whether the control device 102 inputs an instruction for requesting a pre-image via the I/F section 205. The request for the pre-image is a control signal for performing a pre-image recording process, which is one of the exception handling processes that are performed by the control device 102 if the control device 102 determines that the result of the error determining process is the error state. The request for the pre-image corresponds to an instruction for requesting any image obtained until a predetermined period elapses after the request is received. The control device 102 can specify the period for the request for the pre-image. If the pre-image is requested, the process proceeds to S413. If not, the process proceeds to S414.

At S413, the CPU 202 reads any image obtained from the storage medium 204 during a predetermined period back from the current time and outputs the image to the control device 102.

At S414, the CPU 202 determines whether the control device 102 inputs an instruction for requesting information about the event detection result via the I/F section 205. If the instruction for requesting the information about the event detection result is inputted, the process proceeds to S415. If not, the process proceeds to S416.

At S415, the CPU 202 outputs the information about the event detection result to the control device 102 via the I/F section 205.

At S416, the CPU 202 determines whether the control device 102 inputs an instruction for performing the imaging process via the I/F section 205. The instruction for performing the imaging process is an instruction to the cameras 101 for imaging the images that the control device 102 is to use for, for example, the basic operation. For example, the instruction for performing the imaging process is a control signal for causing the cameras 101 to image the images that the control device 102 is to use for performing predetermined image processing such as the error determining process or analyzing process for, for example, detection of information about the position of each workpiece 108. If the instruction for performing the imaging process is inputted, the process proceeds to S417. If not, the process proceed to S420.

At S417, the CPU 202 sets the imaging conditions in which the image for performing the imaging process is imaged. The control device 102 outputs information for setting the imaging conditions to the cameras 101 in the case where the instruction for performing the imaging process is sent. The imaging conditions may be set depending on the process that is to be performed on the imaged image that is obtained by the control device 102. The imaging conditions that are set at S417 may be the same as the imaging conditions for event detection. The CPU 202 sets the imaging conditions of the imaging section 201 on the basis of the information for setting the imaging conditions that are obtained from the control device 102.

At S418, the CPU 202 outputs the instruction for imaging to the imaging section 201 and performs the imaging process based on the imaging conditions to obtain the imaged image.

At S419, the CPU 202 outputs the imaged image that is obtained via the I/F section 205 to the control device 102.

At S420, the CPU 202 determines whether the instruction for termination of imaging is inputted. If the instruction for termination of imaging is inputted, the imaging control is terminated. If not, the process returns to S401.

The event detecting process that is performed by each of the cameras 101 will now be described.

The CPU 202 of each of the cameras 101 can detect events of a "moving subject", "leaving behind", "taking away", "mischief", "intrusion", and "passing through".

In the case where a moving subject is detected in a detection region in the obtained image, a detection result of the "presence of the moving subject" is outputted in a moving subject detecting process. In the case where no moving subject is detected in the detection region, a detection result of the "absence of the moving subject" is outputted. That is, while the moving subject is detected in the detection region in a frame of the imaged image, the detection result of the "presence of the moving subject" is outputted.

In the case where an object that is not present in the detection region of a previous frame in the obtained image is present in the detection region of a subsequent frame for a predetermined time or more, a detection result of the "occurrence of leaving behind" is outputted in a leaving-behind detecting process.

A detection result of the "occurrence of taking away" is outputted in a taking-away detecting process in response to the fact that a predetermined time or more elapses while an object that is present in the detection region of the previous frame in the obtained image is not to be detected in that of the subsequent frame.

In the case where it is detected that an object passes through a predetermined detection line in the obtained image, a detection result of the "occurrence of passing through" is outputted in a passing-through detecting process.

In a case that a predetermined time or more elapses after a person or a moving object is detected in a predetermined detection region in the obtained image, a detection result of the "occurrence of intrusion" is outputted in an intrusion detecting process.

The CPU 202 may perform all detecting processes on the obtained image. The user can select the event detecting process that is performed by the CPU 202 in advance.

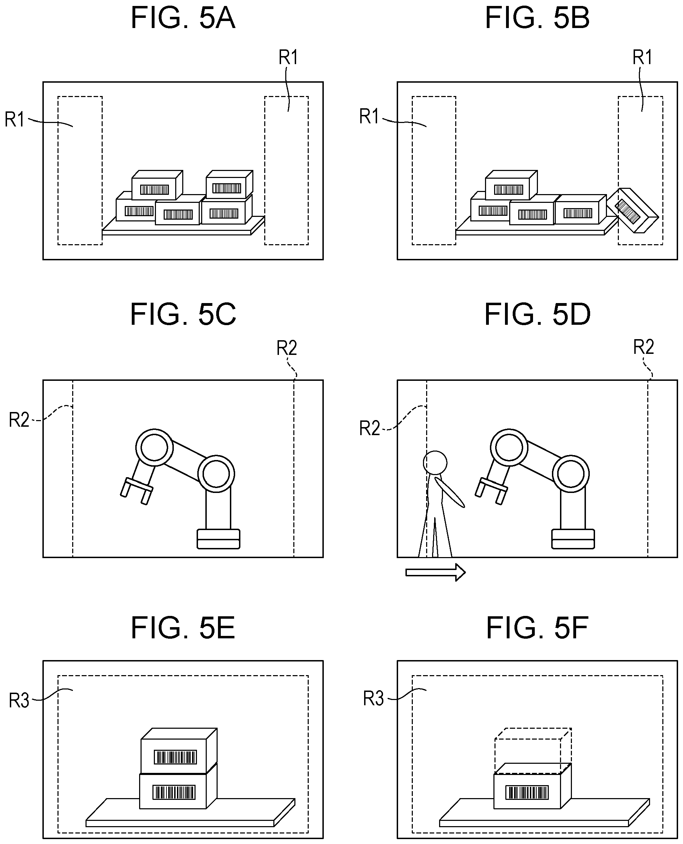

Fig. 5A to Fig. 5F illustrate schematic diagrams of the images that are obtained by the cameras 101. Fig. 5A and Fig. 5B illustrate the images that are obtained by the camera 101a. As illustrated in Fig. 5A, the camera 101a images the region that contains the workbench 107 and the workpieces 108. In the camera 101a, detection regions R1 are set in advance. Each detection region R1 is set to a region that contains neither the workbench 107 nor the workpieces 108, and it is assumed that any of the workpieces 108 or a worker does not intrude into the region.

As illustrated in Fig. 5A, in the case where the workpieces 108 are stacked on the workbench 107 in successive frames, each detection region R1 does not change, and the CPU 202 does not detect the events such as the events of the occurrence of intrusion and the occurrence of leaving behind. As illustrated in Fig. 5B, since the workpieces 108 on the workbench 107 collapses, the workpiece 108 falls and intrudes into the detection region R1. While the moving subject detecting process of the camera 101a is valid, and the workpiece 108 moves in the detection region R1, the detection result of the "presence of the moving subject" is outputted. In a case that the leaving-behind detecting process of the camera 101a is valid, the detection result of the "occurrence of leaving behind" is outputted when a predetermined period elapses after the workpiece 108 enters the detection region R1 and stops moving. In a case that the intrusion detecting process of the camera 101a is valid, the detection result of the "occurrence of intrusion" is outputted when a predetermined period elapses after the workpiece 108 enters the detection region R1. The above event detection enables a change such as the workpiece 108 falling onto the outside of the workspace to be detected.

Fig. 5C and Fig. 5D illustrate the images that are obtained by the camera 101b. As illustrated in Fig. 5C, the camera 101b images the region that contains the robot arm 103. In the camera 101b, detection lines R2 are set in advance. Each detection line R2 is set at a position a certain distance away from the robot arm 103.

As illustrated in Fig. 5C, in the case where there is nothing near the robot arm 103, the CPU 202 does not detect the event such as the occurrence of passing through. As illustrated in Fig. 5D, a person approaches the robot arm 103 across one of the detection lines R2. In a case that the passing-through detecting process of the camera 101a is valid, and the person crosses one of the detection lines R2, the detection result of the "occurrence of passing through" is outputted. This enables any person approaching the robot arm 103 to be detected. Another detecting process such as the intrusion detecting process can be used by setting the detection region to the region that contains the robot arm 103.

Fig. 5E and Fig. 5F illustrate the images that are obtained by the camera 101c. As illustrated in Fig. 5E, the camera 101c images the region that contains the workbench 109 and the workpieces 108. In the camera 101c, a detection region R3 is set in advance. The detection region R3 contains the workbench 109 and the workpieces 108.

In a state illustrated in Fig. 5E, a person takes away the upper workpiece 108 of the two workpieces 108 that are stacked on the workbench 109, and the state changes into a state illustrated in Fig. 5F. In a case that the taking-away detecting process of the camera 101c is valid, the detection result of the "occurrence of taking away" is outputted when a predetermined period elapses after the workpiece 108 is taken away.

The detecting process that is made valid and detection conditions (the detection regions and the detection lines) are set in the above manner depending on the region and object that are imaged by the cameras 101. This enables the event that is to be detected depending on work to be detected.

When the control device 102 starts up, the CPU 302 reads software from the memory 303 and starts a startup process. The CPU 302 causes the display device 104 to display a GUI for setting the operation of the control device 102.

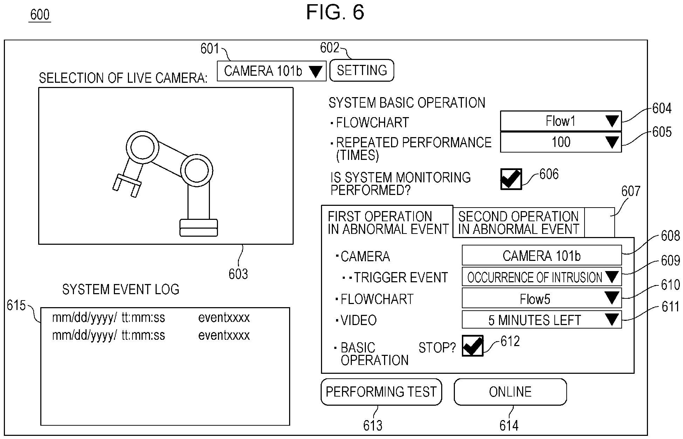

Fig. 6 is a schematic diagram illustrating the GUI for setting the operation of the control device 102. A GUI 600 is displayed on the display device 104 in order to set the basic operation and error handling of the control device 102 according to the present embodiment. The user sets items of the GUI 600 by using the mouse 105 to set the control conditions of the control device 102.

A box 601 is a list box for designating one of the cameras 101. The user operates the box 601 to select the one of the cameras 101.

A setting button 602 is used to set the imaging conditions of the selected one of the cameras 101 to be used. The CPU 302 changes the displayed GUI for setting the imaging conditions of the selected one of the cameras 101 in response to the click of the setting button 602. Examples of the imaging conditions that can be set include the imaging conditions (imaging parameters) such as the white balance, the imaging angle (panning/tilting), the zoom magnification, the focal length, the stop, and the signal amplification factor.

In a video display region 603, a live view image of the one of the cameras 101 selected in the box 601 is displayed.

A box 604 is a list box for setting, by the user, the basic process (basic operation) that is performed by the system. In Fig. 6, "Flow 1" is set as the basic operation.

A box 605 is a text box for setting the termination condition of the basic operation by the user. The operation is set in the GUI in Fig. 6 such that the user sets the number of times the basic operation is repeated, and the basic operation is terminated in response to the process of the Flow 1 being performed the set number of times. The settings can be such that the process is repeated until the termination condition that is defined in the flow of the basic operation is satisfied.

A box 606 is a check box for setting whether the user performs monitoring. The monitoring described herein includes a process of obtaining the result of the event detecting process of each of the cameras 101 by the control device 102 and the error determining process related to the event detection result.

A tab 607 is used to set, by the user, the error determining process that is performed depending on the result of the event detecting process that is performed by each of the cameras 101 and the exception handling process that is performed in the case where it is determined that there is an error. According to the present embodiment, a trigger condition, the error determining process, and the exception handling process can be set for each of the cameras 101. The tab 607 in Fig. 6 is used to set the trigger condition, the error determining process, and the exception handling process for the camera 101b. For the other cameras 101, the user can set the trigger condition, the error determining process, and the exception handling process by switching between the tabs. That is, the trigger condition, the error determining process, and the exception handling process can be set for every region that is imaged by the cameras 101. The trigger conditions, the error determining processes, and the exception handling processes can also be set for each of the cameras. The number of the tabs for setting the trigger condition, the error determining process, and the exception handling process can be freely changed by addition or deletion by the user.

A box 608 is a list box for setting, by the user, one of the cameras 101 that obtains the detection result.

A box 609 is a list box for setting, by the user, the trigger condition representing that which detection content of detection contents that can be obtained by the one of the cameras 101 corresponds to a trigger for start of the error determining process. The setting in Fig. 6 is that the error determining process that is set is performed in the case where information representing the "occurrence of intrusion" is obtained from the camera 101b.

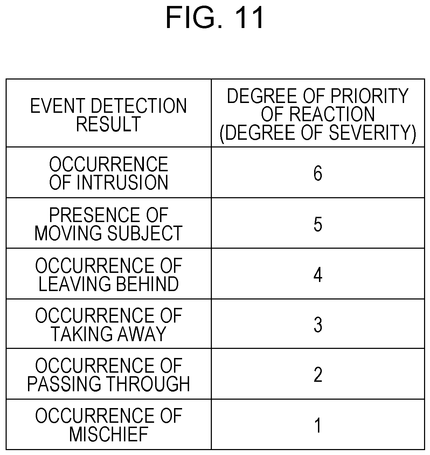

The cameras 101 can detect the events as described above. The control device 102 stores a table in which the event detection result and the degree of priority of reaction are associated with each other in advance. The control device 102 may perform the error determining process also in a case that the obtained detection result corresponds to the degree of priority that is equal to or more than the degree of priority of reaction against the event detection result that is set in the box 609. Fig. 11 is a schematic diagram illustrating the table in which the event detection result and the degree of priority of reaction are associated with each other. For example, in the case where the "occurrence of leaving behind" is set in the box 609, the error determining process is performed in a case that any one of the occurrence of intrusion, the presence of the moving subject, and the occurrence of leaving behind is detected.

The range of an object in which the cameras 101 detect a change and the trigger condition in which the control device 102 performs the exception handling process can be changed depending on the time at which the cameras 101 obtain the images. For example, in a manufacturing line system that uses the control device 102, the range of the object in which the cameras 101 detect a change is narrowed during the daytime in which many workers work near the system in order to reduce misdetection of the system. However, the range of monitoring is widened during the nighttime in which the number of workers is small. During the daytime, the trigger condition in which the exception handling process is performed is set to the event detection result having a high degree of priority of reaction, and the frequency of the error determining process is decreased. During the nighttime, the trigger condition is set to the event detection result having a lower degree of priority of reaction than during the daytime, and the frequency of the error determining process is increased.

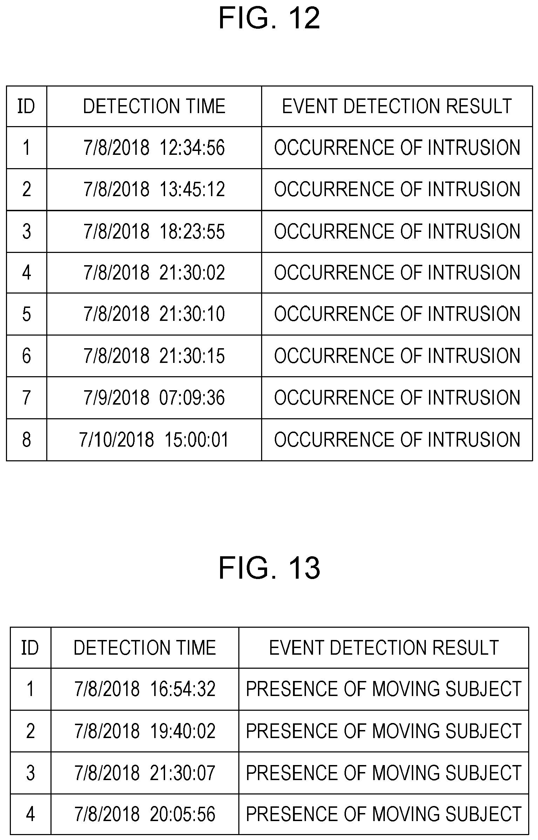

Time of occurrence may be recorded for every kind of the event detection result, and whether the error determining process is performed may be controlled on the basis of the interval of the occurrence. Fig. 12 illustrates a table illustrating a log of the event detection result that is obtained by the camera 101b. The occurrence of intrusion is detected by the camera 101b multiple times. However, the interval to the next detection of the occurrence of intrusion is sufficiently long for ID 1 to ID 3 and ID 7 to ID 8, and the error determining process is not performed. For ID 4 to ID 6, the interval to the next detection of the occurrence of intrusion is short, and the error determining process is performed depending on the event detection result of ID 6 that is detected at a predetermined number of times (for example, the third time).

In some cases where a person and a robot work together, the person who intrudes for the purpose of work such as supply of the workpiece is temporary imaged. Such an event that rarely occurs in a certain time is not an error, and the error determining process is not performed.

The content of a post-process may be changed depending on a combination of event detection of the cameras 101a to 101c. Fig. 13 illustrates a table illustrating a log of the event detection result that is obtained by the camera 101c. In Fig. 12 and Fig. 13, the camera 101c obtains the event detection result of ID 3 while the camera 101b obtains the event detection results of the ID 4 to ID 6. In the case where the cameras 101 thus obtain the event detection results, the error determining process may be performed. In this case, the control device 102 performs the error determining process on the basis of a combination of the detection result of the presence of the moving subject of the camera 101b and the detection result of the presence of the moving subject of the camera 101c. A combination of the event detection results for the cameras 101 may be referred as a condition in which performance of the exception handling process is determined instead of the trigger condition in which the error determining process is performed.

A box 610 is a list box for setting, by the user, the error determining process that is performed by the system in a case that the detection content that is set in the box 609 is detected. In Fig. 6, "Flow 5" is set as the error determining process. The process that is represented by the "Flow 5" will be described in detail later.

A box 611 and a box 612 are items for setting operation during error detection. The box 611 is a list box for setting whether the image is recorded (video) in a case that it is determined that there is an error, and a video condition. A setting that is inputted in the box 611 in Fig. 6 is that a video after the error is detected is recorded (post-video), and recording is stopped after 5 minutes. The cameras 101 can temporary record images for a predetermined period, and images during a predetermined period back from the time at which the error state is determined can be recorded (pre-video). The pre-video is effective to grasp the cause of the error.

The box 612 is a check box for setting, by the user, whether the basic operation in process is stopped in a case that the result of determination is the error state.

A button 613 is used to perform tests of the basic operation, the error determining process, and the exception handling process by the user. A button 614 enables instructions for the system basic operation and the error handling to be received online from the outside. A log that is detected during the test is displayed in a box 615.

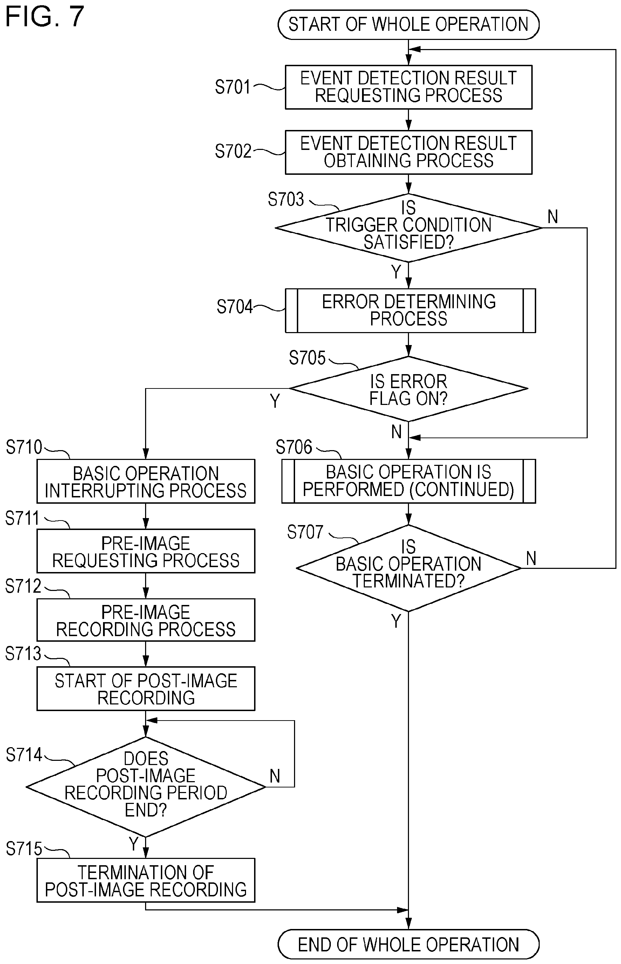

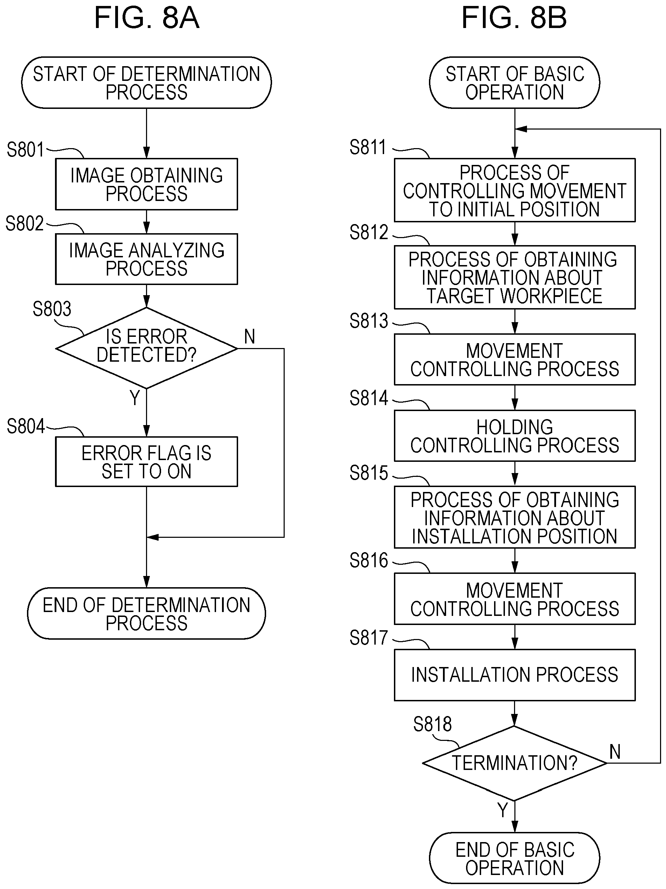

Fig. 7, Fig. 8A and Fig. 8B illustrate flowcharts of control flow of the control device 102. Fig. 7 is the flowchart of the whole operation of the control device 102. The CPU 302 runs software that is stored in the memory 303, and the flowchart in Fig. 7 is started in response to start-up of the control device 102.

At S701, the CPU 302 of the control device 102 requests information about the event detection result from each of the cameras 101. A process of requesting the event detection result is repeatedly performed during the flowchart.

At S702, the CPU 302 obtains the information about the event detection result of each of the cameras 101.

At S703, the CPU 302 determines whether the event detection result satisfies a predetermined trigger condition. If the event detection result of at least one of the cameras 101 satisfies the trigger condition, the process proceeds to S704. If not, the process proceeds to S706. The predetermined trigger condition is that the obtained event detection result coincides with the event detection result that is set in the box 609 of the tab 607 in Fig. 6.

S704 corresponds to a subprocess in which the CPU 302 performs a predetermined determination process. In the error determining process, the image that is obtained from one of the cameras 101 that obtains the event detection result satisfying the trigger condition is analyzed, and whether an error occurs is determined. In the error determining process, whether the image that is obtained from the one of the cameras 101 satisfies a predetermined error determination condition is determined. An example of the error determination condition is whether at least the position, the posture, or both of each workpiece 108 that is contained in the image satisfy a predetermined condition. For example, the case where it is detected that the workpiece 108 inclines at a predetermined angle or more is determined to be in the error state. The error determination condition may be a combination of the position, the posture, and the kind of the workpiece. The error determination condition may be whether a person intrudes into a predetermined workspace in the image. In the case where the CPU 302 determines that an error occurs in the error determining process, an error flag is set to ON.

Fig. 8A is a flowchart of the flow of the error determining process that is performed at S704.

At S801, the CPU 302 obtains the image from one of the cameras 101 the event detection result of which satisfies the trigger condition via the I/F section 301.

At S802, the CPU 302 performs an image analyzing process of detecting the presence or absence of an error on the basis of the obtained image. The image analyzing process is performed on the basis of the flow that is set by the user in advance. For example, as illustrated in Fig. 6, the predetermined setting is that the "Flow 5" is performed in a case that the event detection result satisfies the trigger condition. In the Flow 5, the CPU 302 analyzes an edge of each workpiece 108 that is contained in the imaged image or a bar code that the workpiece 108 has. The CPU 302 obtains information about the kind and the position of the workpiece 108 that is contained in the imaged image and determines that the case where the position and posture of the workpiece 108 are not a predetermined position and a predetermined posture is in the error state.

At S803, the CPU 302 determines whether the error state is detected from the result of the analyzing process.

At S804, the CPU 302 sets the error flag to ON if the error state is detected. If not, the error flag is not set to ON, and the determination process is terminated.

The error determining process, in which the error state is determined, can be set depending on the object, the region, and the environment that are imaged by the cameras 101. The CPU 302 may determine the error state in a manner in which the image is obtained from any of the cameras 101 the event detection result of which satisfies the trigger condition, and the kind of the object that is contained in the obtained image is determined.

For example, the camera 101b that images the region that contains the robot arm 103 detects the occurrence of intrusion. At this time, the CPU 302 analyzes the image that is obtained from the camera 101b that detects the occurrence of intrusion and determines the kind of the object that intrudes into the target region. Specifically, the CPU 302 compares data that represents the characteristics of the object that is stored in the memory 303 and the characteristic value of the intruding object that is obtained by analyzing the image. If it is determined that the intruding object is a person from the result of comparison, the CPU 302 determines the error state (intrusion of the person) in which the person intrudes into the workspace of the robot arm 103.

The description returns to the flowchart in Fig. 7.

At S705, the CPU 302 determines whether the error flag is ON. If the error flag is ON, the process proceeds to S710. If not, the process proceeds to S706.

S706 corresponds to a subprocess in which the CPU 302 performs the basic operation. In the case where a step in the basic operation continues proceeding, the continuing operation is continued. For example, the CPU 302 keeps the continuing operation continuing during a period between start and completion of movement of the robot arm 103 after outputting an instruction for movement of the robot arm 103.

Fig. 8B is a flowchart of the processing flow of the basic operation that is performed at S706.

At S811, the CPU 302 causes the robot arm 103 to move to an initial position. The movement control of the robot arm 103 is implemented in a manner in which target coordinates and movement speed of the hand are instructed with relation to a coordinate system in a predetermined space in which the robot arm 103 can move. The control device 102 may directly control application of power to a drive system of the robot arm 103.

At S812, the CPU 302 obtains information about the position of a target workpiece on the workbench 107.

At S813, the CPU 302 controls the robot arm 103 such that the robot arm 103 moves to a position corresponding to the position of the target workpiece and is in posture corresponding thereto.

At S814, the CPU 302 causes the robot arm 103 to hold the target workpiece.

At S815, the CPU 302 obtains information about the workbench 109 on which the target workpiece is placed. The CPU 302 sends a request for imaging to the camera 101c and obtains the imaged image of the region that contains the workbench 109. The CPU 302 detects the edge in the imaged image to obtain information about the position of the workbench 109, the position, the posture, the kind of each workpiece 108 that is stacked on the workbench 109, and so on.

At S816, the CPU 302 causes the robot arm 103 to move on the basis of the obtained information about the workbench 109.

At S817, the CPU 302 causes the robot arm 103 to move such that the target workpiece is placed at a target position in the workbench 109 and controls the hand such that the target workpiece is released from the hand.

At S818, the CPU 302 determines whether the predetermined termination condition of the basic operation is satisfied.

The CPU 302 determines that the termination condition is satisfied if the basic operation is repeatedly performed the number of times that is inputted in the box 605 in Fig. 6 and terminates the basic operation. If not, the basic operation continues.

The description returns to the flowchart in Fig. 7.

At S707, the CPU 302 determines whether the basic operation is completed. If the basic operation is completed, the CPU 302 terminates the control flow. If not, the process returns to S701.

If it is determined that the error flag is ON at S705, the exception handling process is performed. The exception handling process is set in advance by using the GUI in Fig. 6.

The processes at S710 to S715 are included in the exception handling process. At S710, the CPU 302 performs a process of interrupting the step of the basic operation. This process is performed because the check box 612 representing whether the system is stopped in response to an error in whole control settings illustrated in Fig. 6 is valid. In the case where the check box 612 is set to be invalid in advance, it is not necessary for the process to be performed.

At S711, the CPU 302 performs a process of requesting the pre-image from one of the cameras 101. In the one of the cameras 101 from which the pre-image is requested, the information about the result of image processing satisfies the determination result. The pre-image may be requested from the cameras 101 including the one of the cameras 101 in which the information about the result of image processing satisfies the determination result. For example, the pre-image may be requested from the one of the cameras 101 in which the information about the result of image processing satisfies the determination result, and another one of the cameras 101 that is located near the one of the cameras 101.

At S712, the CPU 302 causes the HDD 304 to record any pre-image that is obtained from the cameras 101. The process at S711 and a pre-image recording process at S712 may not be performed in accordance with the settings.

At S713, the CPU 302 sends an instruction for setting the record flag to ON to the cameras 101. S713 corresponds to a process of starting a post-image recording process. The record flag can be separately set for every one of the cameras 101 that are connected. If it is determined that the result of the error determining process is the error state in any one of the cameras 101, the CPU 302 sets the record flag of the one of the cameras 101 to ON. The record flag may be set to ON for the cameras 101 including one of the cameras 101 in which it is not determined that the result is the error state. For example, the record flag may be set to ON for one of the cameras 101 that detects an event in which the result of the error determining process is determined to be the error state, and another one of the cameras 101 that is located near the one of the cameras 101. The CPU 302 associates time at which recording of the post-image is started and the recorded image with each other for recording.

At S714, the CPU 302 causes the HDD 304 to record any image that is obtained from the cameras 101 and determines whether time that elapses after recording is started exceeds a recording time that is set. If the elapsed time exceeds the recording time that is set, the process proceeds to S715. If not, the process at S714 is repeated. The recording time that is set corresponds to the period that is set in the box 611 of the GUI in Fig. 6.

At S715, the CPU 302 sets the record flag to OFF and terminates the post-image recording process. The post-image recording process at S713, S714, and S715 may not be performed in accordance with the settings. For example, in the case where "no video" is set in the box 611 of the GUI illustrated in Fig. 6, the post-image recording process is not performed, and the control flow is terminated.

The control device 102 thus performs the error determining process in a case that the result of the event detecting process that is performed by each of the cameras 101 satisfies a predetermined condition. Accordingly, it is not necessary for the control device 102 to perform the analyzing process for error determination on all of the obtained images, and the processing load of the control device 102 can be reduced.

Accordingly, the load of the control device 102 for the error determining process is reduced even in a case that the number of the imaging apparatuses that are connected is increased, and a control device that enables delay of another process such as image processing used in the basic operation to be reduced can be provided.

In response to detection of the predetermined event detection result by any one of the cameras 101, the control device 102 may start recording of a video that is imaged by the one the cameras 101 before the determination process is performed. The control device 102 may automatically record a video of another camera related to the one of the cameras 101. This increases a possibility that when the user analyzes the cause of an error later, the user can see a blind spot due to occlusion in a video of one of the cameras by using a video of another camera.

In the above description, examples of the exception handling process in the flowchart in Fig. 7 in a case that the error flag is valid include the basic operation interrupting process, the pre-image recording process, and the post-image recording process. However, another process may be performed. Either the basic operation interrupting process, the pre-image recording process, or the post-image recording process may not be performed.

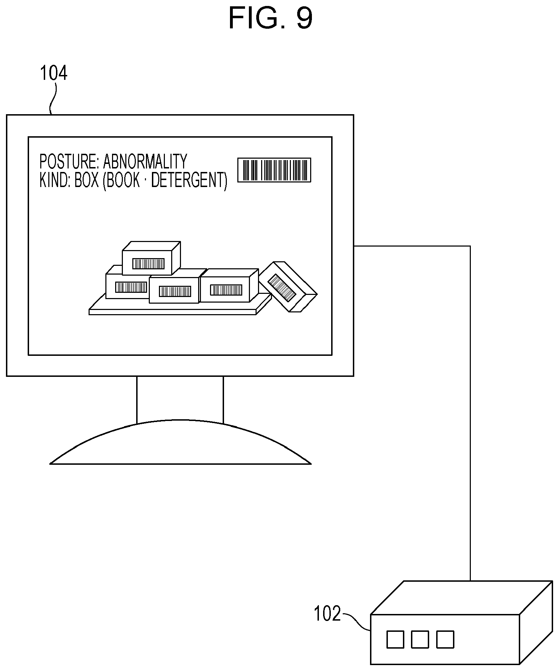

The exception handling process that is performed in a case that the result of determination is the error state may be a process of outputting the image that is used in the error determining process to the display device 104. Fig. 9 is a schematic diagram illustrating the image that is displayed on the display device 104 in the case where the control device 102 outputs the image that is used in the error determining process to the display device 104.

Fig. 9 illustrates the image that is displayed on the display device 104 in a case that the event detection result of the camera 101a is the "occurrence of leaving behind" and the result of determination is the error state as a result of measurement of the position and posture of the workpiece 108 on the basis of the image that is obtained from the camera 101a. The control device 102 displays the image that is obtained by the camera 101c and information about the result that is obtained by analysis in the error determining process. In Fig. 9, the display device 104 displays information about "KIND: BOX (BOOK·DETERGENT)" as the information about one of the workpieces 108 the posture of which corresponds to collapse. The displayed information is an example in which the kind of the workpiece, the registered bar code, and the content are associated with each other and displayed.

The image that is displayed on the display device 104 may be a live view image of one of the cameras 101 that obtains the image that is determined to include an error. Displaying the image of the region in which the error occurs on the display device 104 allows the user to determine a countermeasure to the error from the position, the posture, and the kind of the workpiece. For example, if a workpiece that falls is fragile, the workpiece is replaced with a new one, and if not, the workpiece is reused after inspection.

The exception handling process that is performed in a case that the result of determination is the error state may be a process of controlling the imaging conditions (field of view) of one of the cameras 101 such that the region that is imaged by the one of the cameras 101 that obtains the image that is determined to include the error is imaged by another one of the cameras 101 at a different angle. For example, in a case that the result of determination is the error state in a region near the robot arm 103, the control device 102 changes the imaging angle, the zoom magnification, and focus of the cameras 101a and 101c that are located therearound. This enables a location (a region of an object to be imaged by the camera 101b) in which the error occurs to be imaged in many directions and makes it easy for the user to grasp situations and to make improvements.

### GUI for Setting Job

According to the present embodiment, the user can set a job that is performed by the control device 102. For example, the user can set the basic operation, the error determining process, and the exception handling process as the jobs.

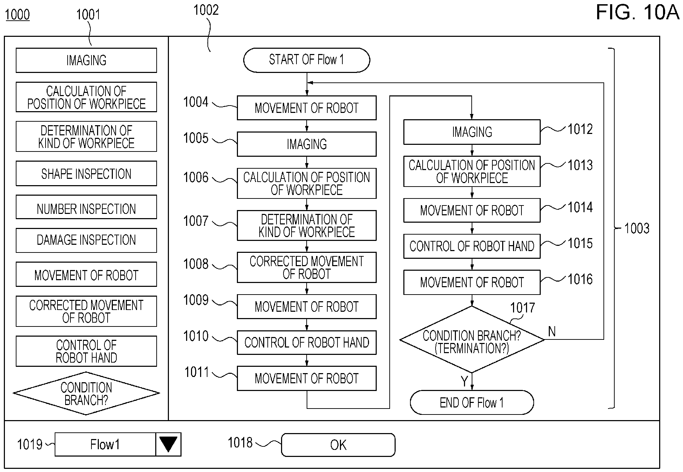

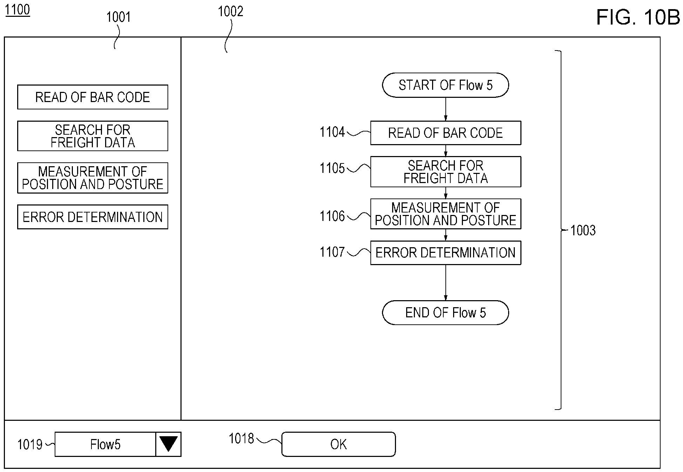

Fig. 10A and Fig. 10B illustrate schematic diagrams of GUIs for setting the basic operation of the control device 102. Specifically, Fig. 10A illustrates a GUI 1000 for creating a flowchart to define a job (Flow 1) related to the basic operation of the control device 102. The GUI 1000 is displayed on the display device 104.

A list region 1001 displays a list of work units related to processes that can be used in the flowchart. The user carries out drag-and-drop of the work units from the list region 1001 into a flowchart region 1002 by using the mouse 105 and connects the work units to each other to create the flowchart.

A flowchart 1003 is an example of the flowchart that is set. In processes represented in the flowchart 1003, the workpiece is taken from the workbench 107 by using the robot arm 103 and arranged on the workbench 109.

In a work unit 1004, the CPU 302 moves the robot to a position above the workbench 107. This corresponds to the process at S811 illustrated in Fig. 8B.

In a work unit 1005, the CPU 302 sends the instruction for imaging a region that contains the workpiece 108 above the workbench 107 to the camera 101a to obtain a moving image from the camera 101a.

In a work unit 1006, the CPU 302 detects the edge in the obtained image to detect the workpiece 108. Position information about the position, the phase, and the posture of the workpiece 108 is obtained.

In a work unit 1007, the CPU 302 recognizes a bar code and a color pattern that are put on the workpiece and performs a process of reading an image of, for example, the bar code that is put on the workpiece 108 to obtain the kind of the workpiece 108. The work units 1005 to 1007 correspond to the process at S812 illustrated in Fig. 8B.

In a work unit 1008, the CPU 302 causes the robot arm 103 to make corrected movement on the basis of the information about the position of the target workpiece 108 that is calculated in the work unit 1006.

With the corrected movement, the hand (end effect) of the robot arm 103 is moved or rotated and located at a position corresponding the position or phase of the target workpiece by movement control.

In a work unit 1009, the CPU 302 causes the robot arm 103 to move to a position at which the workpiece can be held by the hand (end effect), for example, a position right above the workpiece. The work units 1008 and 1009 correspond to the process at S813 illustrated in Fig. 8B.

In a work unit 1010, the CPU 302 controls opening and closing of the hand to hold (pick) the workpiece 108.

In a work unit 1011, the CPU 302 causes the workpiece to be moved to a position above the workbench 109 depending on the kind of the workpiece. The work units 1010 and 1011 correspond to the process at S814 illustrated in Fig. 8B.

In a work unit 1012, the CPU 302 sends the instruction for imaging a region that contains the workbench 109 and a space in which the workpiece is grounded by using the camera 101c to obtain an image from the camera 101c.

In a work unit 1013, the CPU 302 measures the position and posture of the workbench 109 and the workpiece 108 that is stacked by using the obtained image to measure a position at which the workpiece is placed. The work units 1012 and 1013 correspond to the process at S815 illustrated in Fig. 8B.

In a work unit 1014, the CPU 302 causes the robot to move to a height position of placement depending on the number of times the flowchart is repeated or the number of the stack that is obtained from the outside. This corresponds to the process at S816 illustrated in Fig. 8B.

In a work unit 1015, the CPU 302 controls opening and closing of the hand to place the target workpiece 108.

In a work unit 1016, the CPU 302 causes the hand of the robot arm 103 to move to a position above the workbench 109. The work units 1015 and 1016 correspond to the process at S817 illustrated in Fig. 8B.

In a work unit 1017, the CPU 302 determines whether the predetermined termination condition is satisfied. For example, as illustrated in Fig. 6, in the case where the number of times the work is repeated is fixed, the CPU 302 terminates the Flow 1 in response to the total number of times of the work being the fixed number of times of the work. The CPU 302 performs the work unit 1004 again when the total number of times of the work is less than the fixed number of times of the work. The work unit 1017 corresponds to S818.

When the user double-clicks any one of the work units of the flowchart 1003 in the GUI 1000 by using the operation input device (mouse) 105, a setting screen for setting the detail of the work unit appears.

A list box 1019 is a box for selecting the flowchart to be set by the user. The user may select the target flowchart from the list box 1019 or may input the name of a new flowchart to add the new flowchart into the system.

In response to press of a button 1018 by the user, the flow that is selected in the list box 1019 is determined as the content of the flowchart 1003 that is defined in the flowchart region 1002. The CPU 302 creates a job that includes the flowchart for performing the above process and causes the memory 303 to record the flowchart.

Fig. 10B is a schematic diagram illustrating a GUI 1100 for creating a flowchart to define a job related to the determination process of the control device 102. The GUI 1100 is displayed on the display device 104. The flowchart that is set in the GUI 1100 corresponds to the process at S802 illustrated in Fig. 8A.

In a work unit 1104, the CPU 302 performs image processing for reading the bar code.

In a work unit 1105, the CPU 302 performs a process of searching the kind of the workpiece from information about the read bar code.

In a work unit 1106, the CPU 302 detects the edge in the obtained image to detect the workpiece 108. Position information about the position, the phase, and the posture of the workpiece 108 is obtained.

In a work unit 1107, the CPU 302 determines whether the error state (error) has been created on the basis of the kind of the workpiece and the position information of the workpiece.

In an example, the camera 101a detects the presence of the moving subject from the fact that one of the workpieces 108 that are stacked on the workbench 107 moves. In this case, the CPU 302 obtains variations in the position and the posture of the workpiece 108 on the basis of the position information of the workpiece 108 in the work unit 1107. When the detected position or posture of the workpiece 108 is a predetermined degree or more away from the position and posture that are set in advance, the CPU 302 determines that the error state has been created.

In another example, the camera 101a detects the presence of the moving subject from the fact that a small animal or a worker slightly intrudes into the vicinity of the workbench 107. In this case, the amount of movement of each workpiece 108 that is obtained by the CPU 302 is small. Accordingly, the CPU 302 determines that no error state is created because there is no collapse.

When the result of determination is the error state, the CPU 302 sets the error flag to ON and terminates the Flow 5.

A job that the user creates by using an external job-creating device can be stored (copied) and performed. Fixed package functions that are classified by functions and purposes and that include image processing flowcharts may be prepared in advance and provided in a manner in which the user selects one of the functions in the GUI and adjusts parameters thereof.

### Second Embodiment

An industrial automation system according to a second embodiment with a control device images a region that contains a display of a measurement instrument by controlling cameras to obtain the measurement value of the measurement instrument when the event detection result of at least one of the cameras satisfies a predetermined condition. The control device determines whether the obtained measurement value is within a predetermined range. If the obtained measurement value is not within the predetermined range, the control device determines that the error state has been created and performs the exception handling process. The control device performs a process of reporting the occurrence of the error state as the exception handling process.

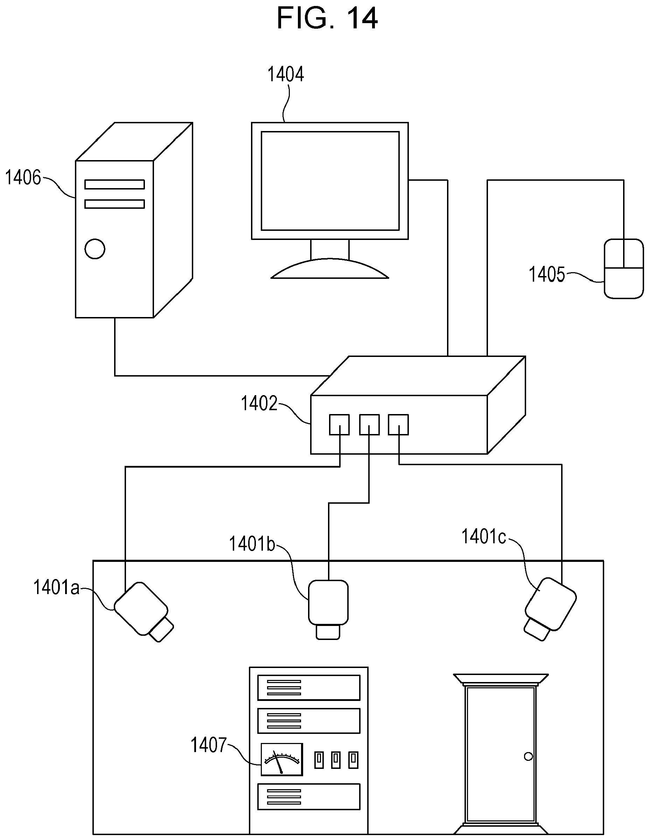

Fig. 14 is a schematic diagram illustrating the structure of the industrial automation system according to the second embodiment.

The industrial automation system includes cameras 1401, a control device 1402, a display device 1404, a mouse 1405, and a server 1406. The operations of the cameras 1401, the display device 1404, the mouse 1405, and the server 1406 are the same as those according to the first embodiment, and a description thereof is omitted. The functional block of the control device 1402 is the same as that of the control device 102 according to the first embodiment, and a description thereof is omitted.

The cameras 1401 image a region of a room that contains a measurement instrument 1407 that displays an output value of a thermometer that detects the temperature of the room with an analog meter. The control device 1402 sends a predetermined report when the output value of the thermometer is not within the predetermined range. Examples of the room in which the thermometer is installed include a clean room and a room in which an environment test is conducted, which needs temperature management. The temperature of the room varies due to variations in the environment such as entering of a person.

The industrial automation system according to the second embodiment monitors the variation in the temperature of the room, and the control device 1402 performs the determination process of determining whether the temperature is within the predetermined range in response to the event of the occurrence of intrusion or the occurrence of passing through that is detected by the cameras 1401.

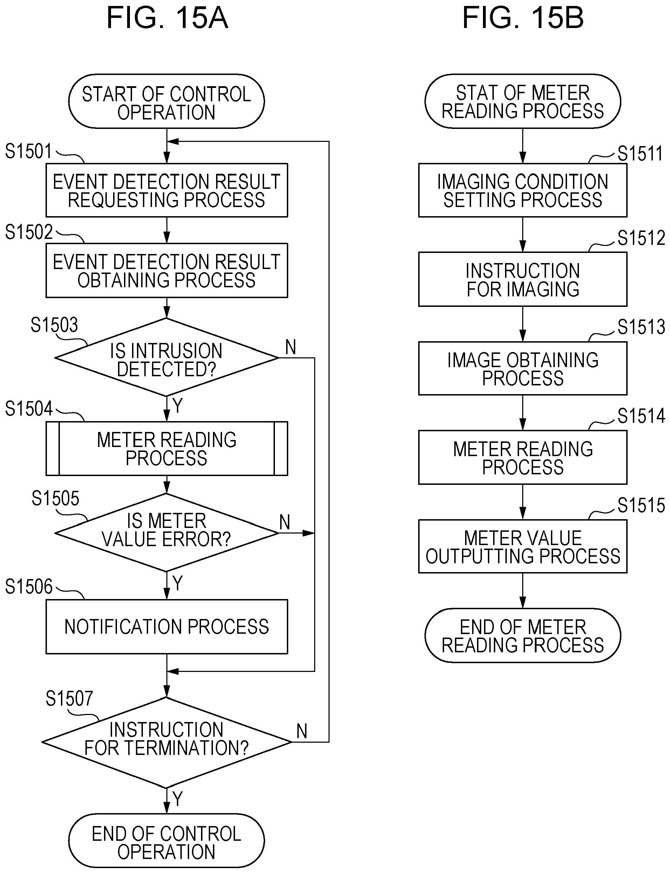

Fig. 15A and Fig. 15B illustrate flowcharts of the operation of the control device 1402.

At S1501, the CPU 302 of the control device 1402 requests information about the result of the event detecting process from each of the cameras 1401.

At S1502, the CPU 302 obtains the information about the result of the event detecting process of each of the cameras 1401.

At S1503, the CPU 302 determines whether the event detection result that is obtained from at least one of the cameras 1401 is the occurrence of intrusion. If the event detection result that is obtained from the at least one of the cameras 1401 is the occurrence of intrusion, the process proceeds to S1504. If not, the process proceeds to S1507.

At S1504, the CPU 302 performs a meter reading process. In the meter reading process, a predetermined region that contains the display (analog meter) of the measurement instrument 1407 is imaged, and the measurement value of the measurement instrument 1407 is obtained. The meter reading process will be described in detail later.

At S1505, the CPU 302 determines whether the measurement value that is obtained in the meter reading process is within the predetermined range. If the measurement value is not within the predetermined range, the CPU 302 determines that the measurement value is an error, and the process proceeds to S1506. If not, the process proceeds to S1507.

At S1506, the CPU 302 performs a notification process of notifying the user that the measurement value is an error. In the notification process, for example, a warning screen is displayed on the display device 104. In the notification process, alert information such as an electronic mail may be sent to a terminal of an administrator. In the notification process, information representing the time of the occurrence of the error, the measurement value, and the fact that the error occurs may be recorded into a log of the server 106.

Fig. 15B is a flowchart of the meter reading process.

At S1511, the CPU 302 performs a setting process of changing the imaging conditions of the cameras 1401. The CPU 302 sends settings of the imaging position, the zoom magnification, the focal length, and exposure to obtain imaged images in which the scale of the display of the measurement instrument 1407 that is specified in advance can be read. An instruction for making automatic adjustment by the cameras may be sent.

At S1512, the CPU 302 outputs the instruction for imaging to the cameras 1401.

At S1513, the CPU 302 obtains, from the cameras 1401, the images that are imaged by the cameras 1401 in response to the imaging conditions and the instruction for imaging that are sent.

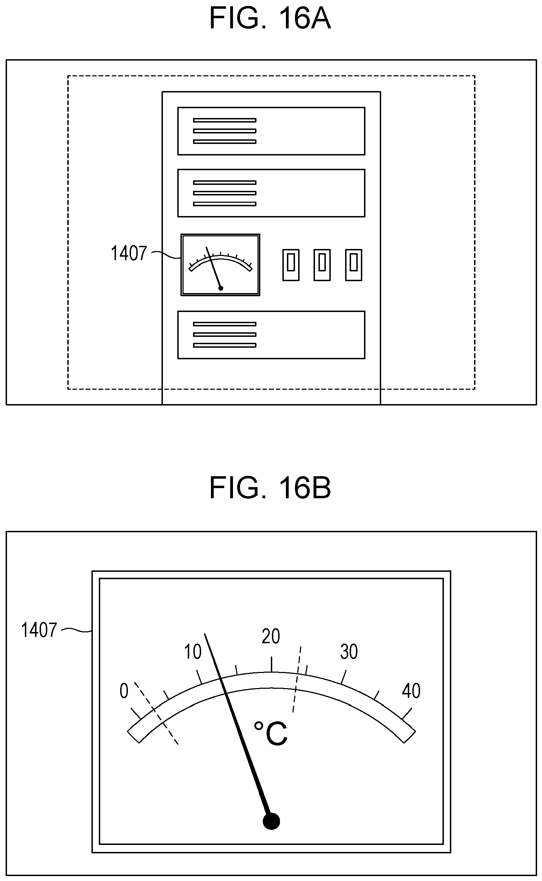

Fig. 16A and Fig. 16B illustrate schematic diagrams of some of the images that are obtained by the cameras 1401.

Fig. 16A is a schematic diagram of the image that one of the cameras 1401 images in the imaging conditions for the event detecting process set at S1511. As illustrated in Fig. 16A, the one of the cameras 1401 images a region that contains the measurement instrument 1407 with low magnification, that is, at a wide angle while the meter reading process is not performed. This makes it easy to detect the intrusion of a person because a wider range is imaged. The detection region in the intrusion detecting process is set to a region illustrated by a dashed line in the figure.

Fig. 16B is a schematic diagram of the image that is imaged by one of the cameras 1401 in the process at S1512. The imaging conditions are set at S1511 in the meter reading process. Consequently, the region that contains the display is imaged with high magnification such that a pointed value and the scale of the display of the measurement instrument 1407 can be analyzed by the control device 1402.

At S1514, the CPU 302 reads the measurement value from each obtained image. The CPU 302 detects the region that contains the scale and the region that contains a needle in the image. The value that the measurement instrument 1407 points is obtained on the basis of a scale value and the position of the needle that are contained in a scale region. For example, in the case where the image illustrated in Fig. 16B is processed, the CPU 302 obtains 13°C as the measurement value.

At S1515, the CPU 302 outputs the obtained measurement value to a scale 503.

The control device 1402 thus performs the process of obtaining the measurement value when the result of the event detecting process that is performed by at least one of the cameras 1401 satisfies the predetermined condition and performs the process of determining whether the measurement value is an error. Accordingly, it is not necessary for the control device 1402 to frequently perform the analyzing process for error determination on the image of the measurement instrument 1407, and the processing load of the control device 1402 can be reduced.

Accordingly, the load of the control device for the error determining process is reduced even when the number of the imaging apparatuses that are connected is increased, and a control device that enables delay of another process to be reduced can be provided.

In the description according to the second embodiment, the measurement instrument 1407 the measurement value of which is read by the control device 1402 displays the measurement value with the analog meter. However, the measurement instrument 1407 is not limited thereto. For example, the measurement instrument may display the measurement value with a digital panel meter (digital OCR), which displays a numerical value digitally. In this case, the control device 1402 obtains the numerical value that is contained in the image in the image analyzing process such as a pattern matching process to read the measurement value.

A float flow meter that measures a flow rate by the position of a float is also acceptable. In this case, in the image analyzing process, the control device 1402 obtains the position of the float on the scale that is marked in a taper tube including the float to read the measurement value.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments.

## Claims

1. A control device connectable to imaging apparatuses (101a, 101b, 101c) each of which is arranged to obtain an image and to perform a first process of determining whether the obtained image satisfies a first condition, the control device comprising:
an obtaining unit (301) arranged to obtain information regarding whether the obtained image satisfies a first condition from each of the imaging apparatuses; and
a processing unit (302) arranged to obtain an image from a target imaging apparatus among the imaging apparatuses (101a, 101b, 101c), the information of the target imaging apparatus satisfies the first condition, and to perform a second process of determining whether the image obtained from the target imaging apparatus satisfies a second condition.

2. The control device according to Claim 1,
wherein the processing unit (302) is arranged to perform a third process that differs from the second process in a case that the information of all of the imaging apparatuses (101a, 101b, 101c) does not satisfy the first condition.

3. The control device according to Claim 2,
wherein the processing unit (302) is arranged to perform the third process in a case that a result of the second process does not satisfy the second condition.

4. The control device according to Claim 2 or Claim 3,
wherein the control device is connectable to a device arranged to convey an object in response to an instruction from the control device, and
wherein the third process includes a process of instructing operation of the device.

5. The control device according to any one of Claim 1 to Claim 4,
wherein the processing unit (302) is arranged to start a process of recording an image that is obtained by the target imaging apparatus on a recording medium in a case that a result of the second process satisfies the second condition.

6. The control device according to Claim 5, further comprising:
a recording unit arranged to associate a time at which recording of the image is started and the image that is stored with each other, for recording.

7. The control device according to any one of Claim 1 to Claim 6,
wherein the processing unit (302) is arranged to determine whether the second process is performed on a basis of a combination of results of the first process that are obtained from the imaging apparatuses.

8. The control device according to any one of Claim 1 to Claim 7, further comprising:
a setting unit arranged to set a process that is performed in a case that a result of the second process satisfies the second condition.

9. The control device according to any one of Claim 1 to Claim 8,
wherein the processing unit is arranged to control at least one of focus and a field of view of the target imaging apparatus in a case that a result of the second process satisfies the second condition.

10. The control device according to any one of Claim 1 to Claim 9,
wherein the processing unit (302) includes an output unit arranged to output information about a result of the second process to an external device in a case that the result of the second process satisfies the second condition.

11. The control device according to any one of Claim 1 to Claim 10,
wherein the second condition represents at least one of a position and a posture of an object, and the second process is a process of determining whether the at least one of the position and the posture of an object that is contained in the image satisfy the second condition.

12. The control device according to any one of Claim 1 to Claim 11,
wherein the first process is a process of detecting at least one of that an object intrudes into a predetermined region in the image, that an object passes through the region, that an object is left behind in the region, and that an object is taken away from the region.

13. An industrial automation system comprising:
imaging apparatuses (101a, 101b, 101c);
a driving device (103); and
a control device (102) arranged to control the driving device (103) in response to an image that is obtained from each of the imaging apparatuses (101a, 101b, 101c),
wherein each of the imaging apparatuses (101a, 101b, 101c) includes an imaging unit (201),
a first processing unit (202) arranged to perform a first process of determining whether an image that is captured by the imaging unit (201) satisfies a first condition on the captured image, and
an output unit (205) arranged to output an image and information about a result of the first process, and
wherein the control device (102) includes
an obtaining unit (301) arranged to obtain the information about the result of the first process from each of the imaging apparatuses (101),
a second processing unit (302) arranged to perform a second process of determining whether an image that is obtained from a target imaging apparatus among the imaging apparatuses (101), the information of the target imaging apparatus satisfies the first condition, satisfies a second condition, and
a control unit arranged to change control of the driving device (103) depending on a result of the second process.

14. A method of controlling a control device (102) that is connected to imaging apparatuses (101) each of which obtains an image and performs a first process of determining whether the obtained image satisfies a first condition, the method comprising:
an obtaining step of obtaining information about a result of the first process from each of the imaging apparatuses (101); and
a processing step of obtaining an image from a target imaging apparatus among the imaging apparatuses (101), the information of the target imaging apparatus satisfies the first condition, and performing a second process of determining whether the image obtained from the target imaging apparatus satisfies a second condition.

15. The method according to Claim 14,
wherein at the processing step, a third process that differs from the second process is performed in a case that the result of the first process does not satisfy the first condition.

16. The method according to Claim 15,
wherein at the processing step, the third process is performed in a case that a result of the second process does not satisfy the second condition.

17. The method according to Claim 15 or Claim 16,
wherein the control device is connectable to a device arranged to convey an object in response to an instruction from the control device, and
wherein the third process includes a process of instructing operation of the device.

18. The method according to any one of Claim 14 to Claim 16,
wherein at the processing step, a process of recording an image that is obtained by the target imaging apparatus on a recording medium is started in a case that a result of the second process satisfies the second condition.

19. A program that, when executed by a control device, causes the control device to perform the method of claim 14.

20. A non-transitory computer-readable storage medium storing a computer program according to claim 19.
